# EUROPÄISCHE PATENTSCHRIFT

(11) **EP 1 025 467 B1**
(45) Veröffentlichungstag und Bekanntmachung des Hinweises auf die Patenterteilung: **13.06.2001**
(21) Anmeldenummer: 98958196.2
(22) Anmeldetag: 12.10.1998
(51) Int. Cl.: G05B 5/01

(54) **VERFAHREN ZUR EINSTELLUNG DER REGLERPARAMETER EINES ZUSTANDSREGLERS**
METHOD FOR ADJUSTING THE CONTROL PARAMETERS OF A STATUS CONTROLLER
PROCEDE PERMETTANT DE REGLER LES PARAMETRES DE COMMANDE D'UN REGULATEUR D'ETAT

(30) Priorität: 24.10.1997 DE 19747125
(43) Veröffentlichungstag der Anmeldung: 09.08.2000
(73) Patentinhaber: SIEMENS AKTIENGESELLSCHAFT, 80333 München (DE)
(72) Erfinder: ADAMY, Jürgen, D-91338 Igensdorf (DE); KÖNEMUND, Martin, D-90419 Nürnberg (DE)
(86) Internationale Anmeldenummer: DE9803006
(87) Internationale Veröffentlichungsnummer: WO9922276

(56) Entgegenhaltungen:
- PREUSS H P: "CHARAKTERISTISCHE POLKONFIGURATIONEN BETRAGSOPTIMALER REGELKREISE" AUTOMATISIERUNGSTECHNIK - AT, Bd. 40, Nr. 10, 1. Oktober 1992, Seiten 373-378, XP000311940
- G.SHI ET AL: "CIRCULAR POLE ASSIGNMENT FOR CONTINUOUS-TIME DESCRIPTOR SYSTEMS " CONTROL THEORY AND ADVANCED TECHNOLOGY, Bd. 10, Nr. 2, Juni 1994, Seiten 187-194, XP002092537 JAPAN

## Beschreibung

Die Erfindung betrifft ein Verfahren sowie ein System zur Einstellung der Reglerparameter eines Zustandsreglers.

Zustandsregelungen weisen den Vorteil auf, daß bei geeigneter Parametrierung eine hohe Regelgüte erreichbar ist. Insbesondere gegenüber den weit verbreiteten PID-Reglern ist ein wesentlich besseres Regelverhalten erzielbar.

Aus Bunzemeier, A., "Ein praxisorientiertes Inbetriebnahmekonzept für Zustandsregler im Bereich der Dampftemperaturregelung", VGB Kraftwerkstechnik 76 (1996), Heft 11, Seiten 911 bis 917, ist eine Zustandsregelung mit Inbetriebnahmekonzept zur Regelung eines Dampfüberhitzers bekannt.

Die Schwierigkeit bei Zustandsregelungen besteht darin, daß in der Regel erhebliches Fachwissen erforderlich ist, um einen Zustandsregler so zu parametrieren, daß das gewünschte Regelverhalten erzielt wird. Die einem geschlossenen Regelkreis mit Regelstrecke und Zustandsregler bei Darstellung in einer komplexen Frequenzbereichsebene zugrundeliegenden und mittels der Parametrierung festlegbaren Polstellen sind maßgeblich für das Regelverhalten des Regelkreises. Dabei ist es schwierig und insbesondere nur mittels einschlägigem Fachwissen möglich, aus den Reglerparametern bzw. den Pollagen auf das voraussichtliche Regelverhalten zu schließen.

Aufgabe der Erfindung ist es, die Einstellung der Regelparameter eines Zustandsreglers zu verbessern.

Die Aufgabe wird gelöst mit einem Verfahren gemäß Anspruch 1 sowie mit einem System gemäß Anspruch 11.

Vorteil des erfindungsgemäßen Verfahrens ist es, daß die Reglerparameter des Zustandsreglers nur derart veränderbar sind, daß bei einer Darstellung der Polstellen des geschlossenen Regelkreises in einer komplexen Frequenzbereichsebene die Einstellung eine Verschiebung der Polstellen annähernd entlang von Halbkreisen und/oder entlang von Ursprungsstrahlen bewirkt.

Besonders vorteilhaft ist es, daß mittels dem erfindungsgemäßen Verfahren eine Einstellung der Reglerparameter des Zustandsreglers durch Vorgabe von regelungstechnisch anschaulichen Einstellparametern vornehmbar ist. Ausgehend von einer Grundeinstellung des Zustandsreglers, welche beispielsweise eine grobe Voreinstellung des Zustandsreglers ist, ist eine darauf aufsetzende Feineinstellung des geschlossenen Regelkreises ohne besondere regelungstechnische Kenntnisse vornehmbar.

Damit ist es vorteilhaft möglich, bei einer mittels eines Zustandsreglers zu regelnden Regelstrecke zunächst als Ausgangsbasis von einem Zustandsregler mit einer standardisierten Grundeinstellung der Regelparameter auszugehen. Die standardisierte Grundeinstellung bzw. der Zustandsregler selbst ist beispielsweise aus einem Katalog auswählbar. Mittels des erfindungsgemäßen Verfahrens ist dann auf einfache Weise eine Einstellung und insbesondere eine Optimierung der Regelparameter des Zustandsreglers vornehmbar, so daß das gewünschte Regelverhalten des geschlossenen Regelkreises erzielt wird.

Des weiteren vorteilhaft ist es, daß mittels des erfindungsgemäßen Verfahrens aufgrund von anschaulichen Einstellparametern, wie insbesondere Überschwingfaktor, Ausregelzeitfaktor oder Anregelzeit, eine Verschiebung der Polstellen und damit ein Einstellung des Regelverhaltens des geschlossenen Regelkreises erfolgt.

Weitere vorteilhafte Ausführungsformen der Erfindung sind in den entsprechenden Unteransprüchen angegeben.

Die Erfindung wird des weiteren anhand der in den nachfolgend kurz angeführten Figuren dargestellten Ausführungsbeispiele weiter erläutert. Dabei zeigt:
- FIG 1: beispielhaft einen geschlossenen Regelkreis mit Regelstrecke und Zustandsregler mit Beobachter,
- FIG 2a: beispielhaft eine Darstellung der Polstellen der Regelstrecke in einer komplexen Frequenzbereichsebene,
- FIG 2b: beispielhaft eine Darstellung des geschlossenen Regelkreises in einer komplexen Frequenzbereichsebene mit einer Grundeinstellung der Reglerparameter des Zustandsreglers,
- FIG 2c: beispielhaft die Darstellung des geschlossenen Regelkreises in der komplexen Frequenzbereichsebene der FIG 2b, wobei die Einstellung gemäß der Erfindung eine Verschiebung der Polstellen annähernd entlang von Halbkreisen bewirkt, und
- FIG 2d: beispielhaft die Darstellung des geschlossenen Regelkreises in der komplexen Frequenzbereichsebene der FIG 2b, wobei die Einstellung gemäß der Erfindung eine Verschiebung der Polstellen annähernd entlang von Ursprungsstrahlen bewirkt.

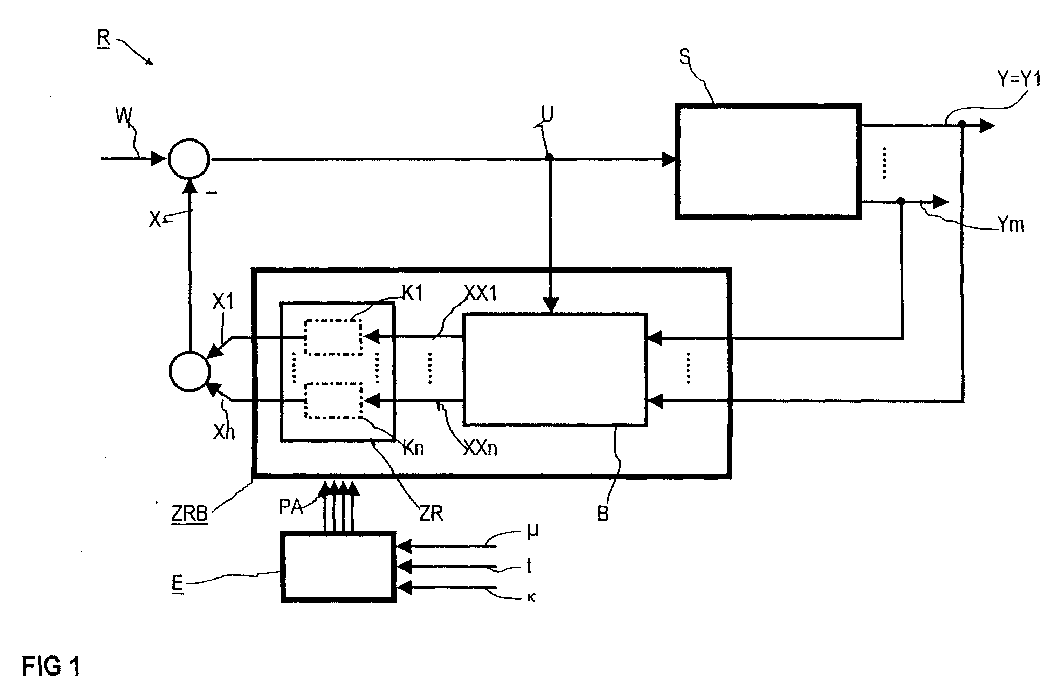

In Figur 1 ist beispielhaft ein geschlossener Regelkreis R dargestellt, welcher zumindest aus einem Zustandsregler ZRB und einer Regelstrecke S gebildet wird. Der Zustandsregler ZRB weist insbesondere einen Beobachter B zur Ausgabe von Regelschätzwerten XX1 bis XXn aus Meßgrößen Y1 bis Ym der Regelstrecke S und einer der Regelstrecke S zugeführten Stellgröße U auf. In der Regel ist dabei eine der Meßgrößen Y1 bis Ym der Regelstrecke S die Regelgröße Y, also diejenige Größe, deren Ist-Wert durch den Zustandsregler ZRB bei Vorgabe eines Regelsollwertes W geregelt wird. Im Beispiel der Figur 1 ist als Regelgröße Y beispielhaft die Meßgröße Y1 gewählt worden. Die Regelschätzwerte XX1 bis XXn entsprechen in etwa, wie bei Zustandsbeobachtern B üblich, den in der Regel nicht direkt meßbaren Zustandsgrößen der Regelstrecke S. Der Zustandsregler ZRB weist des weiteren einen Basis-Zustandsregler ZR auf, dem die Regelschätzwerte XX1 bis XXn des Zustandsbeobachters B zugeführt sind. Aus den Regelschätzwerten XX1 bis XXn erstellt der Basis-Zustandsregler ZR Reglerausgangsgrößen X1 bis Xn, deren Summe den Regleristwert X ergibt. Die Subtraktion des Regleristwertes X vom Regelsollwert W ergibt die der Regelstrecke S zugeführte Stellgröße U.

Der Basis-Zustandsregler ZR des Zustandsreglers ZRB weist insbesondere Reglerkoeffizienten K1 bis Kn auf, welche als Bestandteil der Regelparameter PA des Zustandsreglers ZRB das Regelverhalten des geschlossenen Regelkreises R festlegen. Die Werte der Reglerkoeffizienten Kl bis Kn beeinflussen die Polstellen des geschlossenen Regelkreises R, so daß bei deren Darstellung in einer komplexen Frequenzbereichsebene die Lage der Polstellen des geschlossenen Regelkreises R mittels der Reglerkoeffizienten K1 bis Kn veränderbar ist. Der Basis-Zustandsregler ZR wird insbesondere auch als "Zustandsregler" bezeichnet, wobei der Zustandsregler ZRB dann als "Zustandsregler mit Beobachter" bezeichnet wird. Aus Gründen der Übersichtlichkeit werden aber die ursprünglich eingeführten Bezeichnungen verwendet.

Zur Durchführung des erfindungsgemäßen Verfahrens ist dem Zustandsregler ZRB insbesondere eine Reglereinstellvorrichtung E zugeordnet, welche zur Einstellung der Reglerparameter PA und der damit verbundenen Einstellung der Reglerkoeffizienten K1 bis Kn dient. Im folgenden wird unter einer Einstellung der Reglerparameter PA auch immer die Einstellung der Reglerkoeffizienten K1 bis Kn verstanden. Der Reglereinstellvorrichtung E sind als Einstellparameter insbesondere regelungstechnisch anschauliche Parameter, wie beispielsweise ein Überschwingfaktor κ, ein Ausregelzeitfaktor µ und/oder eine Anregelzeit t für das Regelverhalten des geschlossenen Regelkreises R zugeführt. Dabei ist der Überschwingfaktor κ ein Maß für die Stärke der Oszillationen im geschlossenen Regelkreis R und die Anregelzeit t bzw. der Ausregelzeitfaktor µ ein Maß für die Zeitdauer bzw. die Geschwindigkeit, die der geschlossene Regelkreis R aufweist, um bei einem Führungs- bzw. Störgrößensprung einem stationären Wert genügend nahezukommen.

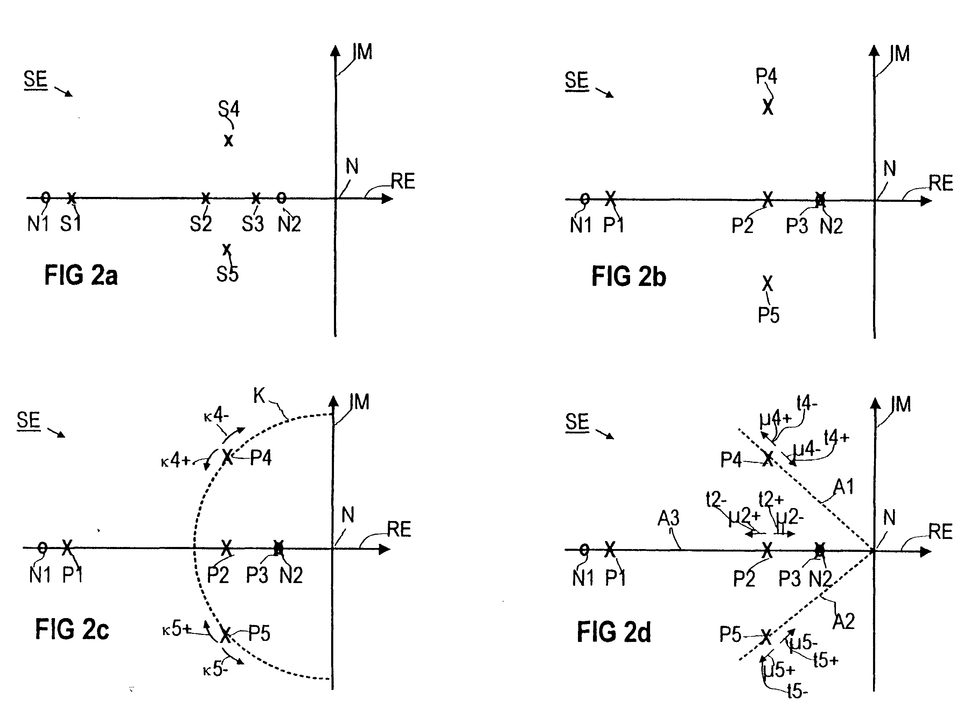

In der Figur 2a sind beispielhaft mit "x" bzw. "o" markierte Polstellen S1 bis S5 bzw. Nullstellen Nl bis N2 der Regelstrecke S in einer komplexen Frequenzbereichsebene SE dargestellt. Die dargestellten Pol- und Nullstellen der Regelstrecke S sind dabei beispielhaft gewählt und hängen insbesondere von den Eigenschaften der tatsächlich verwendeten Regelstrecke S ab. Beispielsweise ist die Regelstrecke S eine zu regelnde Maschine, beispielsweise eine Kunststoffspritzgießmaschine.

Die Darstellung von Pol- und Nullstellen S1 bis S5 und N1 bis N2 der Regelstrecke S erhält man vorzugsweise durch eine sogenannte "Laplace-Transformation" der Übertragungsfunktion der Regelstrecke S vom Zeitbereich in den komplexen Frequenzbereich, der in dieser und den folgenden Figuren als komplexe Frequenzbereichsebene SE dargestellt ist. Die Frequenzbereichsebene SE wird auch als sogenannte "s-Ebene" bezeichnet. Die komplexe Frequenzbereichsebene SE weist eine Imaginärteilachse IM und eine Realteilachse RE auf. Der Ursprungspunkt der Frequenzbereichsebene SE, bei dem sowohl die Imaginärals auch die Realteilachse IM und RE den Wert Null aufweist, weist das Bezugszeichen N auf.

In der Figur 2b ist beispielhaft der geschlossene Regelkreis R in der komplexen Frequenzbereichsebene SE dargestellt. Der geschlossene Regelkreis R wird dabei aus der in den Figuren 1 und 2a dargestellten Regelstrecke S mit den Pol- und Nullstellen S1 bis S5 und N1 bis N2, sowie dem Zustandsregler ZRB gebildet. Die Darstellung in der komplexen Frequenzbereichsebene SE ist vergleichbar mit der von Figur 2a, allerdings liegt der Transformation in den komplexen Frequenzbereich die Übertragungsfunktion des gesamten geschlossenen Regelkreises R zugrunde. Die Polstellen, welche der Zustandsregler ZRB selbst aufweist, sind aus Gründen der Übersichtlichkeit nicht aufgeführt. Der geschlossene Regelkreis R weist somit bei Darstellung in der komplexen Frequenzbereichsebene SE die Nullstellen N1 bis N2, sowie nunmehr die mit "X" markierten Polstellen P1 bis P5 auf.

In der Darstellung der Figur 2b liegt dem geschlossenen Regelkreis R die oben aufgeführte Grundeinstellung des Zustandsreglers ZRB zugrunde. Mit dem erfindungsgemäßen Verfahren sind nun die Reglerparameter PA des Zustandsreglers ZRB einstellbar. Mittels der erfindungsgemäßen Einstellung der Reglerparameter PA ist somit das Regelverhalten des geschlossenen Regelkreises R optimierbar.

In den Figuren 2c und 2d ist beispielhaft dargestellt, wie das erfindungsgemäße Verfahren zur Einstellung der Reglerparameter PA eines Zustandsreglers ZRB auf die Polstellen P1 bis P5 des geschlossenen Regelkreises R wirkt. Dabei sind erfindungsgemäß die Reglerparameter PA einschließlich der Reglerkoeffizienten K1 bis Kn nur derart veränderbar, daß bei einer Darstellung der Polstellen P1 bis P5 des geschlossenen Regelkreises R in der komplexen Frequenzbereichsebene SE die Einstellung eine Verschiebung der Polstellen P1 bis P5 annähernd oder exakt entlang von Halbkreisen K und/oder Ursprungsstrahlen A1 bis A3 bewirkt. Die Erfindung wird im folgenden beispielhaft anhand des Halbkreises K für die Polstellen P4 und P5, sowie der Ursprungsstrahlen A1 bis A3 für die polstellen P2, P4 und P5 beschrieben.

In der Figur 2c ist dabei beispielhaft eine Einstellung gemäß des erfindungsgemäßen Verfahrens dargestellt, welche eine Verschiebung der Polstellen P4 und/oder P5 annähernd entlang eines Halbkreises K bewirkt. Bevorzugt verläuft der Halbkreis K in der negativen komplexen Halbebene der Frequenzbereichsebene SE und weist als Mittelpunkt den Ursprungspunkt N der Frequenzbereichsebene SE auf. Die negative komplexe Halbebene ist dabei diejenige Halbebene, welche links der Imaginärteilachse IM verläuft, d.h. die Halbebene, welche die negative Realteilachse RE beinhaltet.

In einer Ausführungsform der Erfindung sind die Reglerparameter PA nur derart veränderbar, daß eine Verschiebung derjenigen Polstellen P4 und P5 entlang des Halbkreises K bewirkt wird, welche nicht auf der Realteilachse RE der Frequenzbereichsebene SE liegen. Somit sind die Reglerparameter PA nur derart veränderbar, daß auf der Realteilachse RE liegende Polstellen, wie beispielsweise die Polstellen P1, P2 und P3 nicht entlang eines Halbkreises verschiebbar sind.

In einer weiteren, in der Figur 2c dargestellten Ausführungsform der Erfindung sind zur Vergrößerung bzw. Verringerung des Überschwingfaktors κ des geschlossenen Regelkreises R die Reglerparameter PA nur derart veränderbar, daß eine Verschiebung zumindest einer Polstelle P4 und/oder P5 entlang eines Halbkreises K in Richtung der Real- bzw. Imaginärteilachse RE bzw. IM der Frequenzbereichsebene SE bewirkt wird. Bei einer Einstellung gemäß der Erfindung, welche zu einer Verschiebung zumindest der Polstelle P4 und/oder P5 entlang des Halbkreises K in Richtung der Imaginärteilachse IM führt, wird somit der Überschwingfaktor K des geschlossenen Regelkreises R verringert. Die Verschiebungsrichtung ist mit den Bezugszeichen κ4- und κ5- bezeichnet. Bei einer Einstellung gemäß der Erfindung, welche zu einer Verschiebung zumindest der Polstelle P4 und/oder P5 entlang des Halbkreises K in Richtung der Realteilachse RE führt, wird somit der Überschwingfaktor κ des geschlossenen Regelkreises R vergrößert. Die Verschiebungsrichtung ist mit den Bezugszeichen κ4+ und κ5+ bezeichnet.

Bevorzugt sind die Reglerparameter PA nur derart veränderbar, daß bei Polstellenpaaren, wie beispielsweise dem Polstellenpaar P4 und P5 eine spiegelsymmetrische Verschiebung bewirkt wird. Die Polstellen P4 und P5 werden im Beispiel der Figur 2c entlang des Halbkreises K dann entweder spiegelsymmetrisch bezüglich der Realteilachse RE aufeinander zu, d.h. zur Realteilachse RE oder spiegelsymmetrisch bezüglich der Realteilachse RE voneinander weg, d.h. zur Imaginärteilachse IM verschoben.

In der Figur 2d ist gemäß einem weiteren Ausführungsbeispiel der Erfindung beispielhaft eine Einstellung gemäß des erfindungsgemäßen Verfahrens dargestellt, welche eine Verschiebung der Polstellen P2, P4 und/oder P5 annähernd entlang von Ursprungsstrahlen A1 bis A3 bewirkt. Die Ursprungsstrahlen A1 bis A3 weisen als Startpunkt insbesondere den Ursprungspunkt N auf und verlaufen bevorzugt in der negativen komplexen Halbebene der Frequenzbereichsebene SE.

In einer weiteren, in der Figur 2d dargestellten Ausführungsform der Erfindung sind zur Vergrößerung bzw. Verringerung des Ausregelzeitfaktors µ des geschlossenen Regelkreises R die Reglerparameter PA nur derart veränderbar, daß eine Verschiebung zumindest einer Polstelle P2, P4 und/oder P5 entlang eines Ursprungsstrahls A1 bis A3 weg vom bzw. hin zum Ursprungspunkt N der Frequenzbereichsebene SE bewirkt wird. Insbesondere umgekehrt analog zum Ausregelzeitfaktor u ist insbesondere auch die Anregelzeit t des geschlossenen Regelkreises R einstellbar, wobei zur Vergrößerung bzw. Verringerung der Anregelzeit t die Reglerparameter PA nur derart veränderbar sind, daß eine Verschiebung zumindest einer Polstelle P2, P4 und/oder P5 entlang eines Ursprungsstrahls A1 bis A3 hin zum bzw. weg vom Ursprungspunkt N der Frequenzbereichsebene SE bewirkt wird.

Bei einer Einstellung gemäß der Erfindung, welche zu einer Verschiebung zumindest der Polstelle P2, P4 und/oder P5 entlang des entsprechenden Ursprungsstrahls A1 bis A3 in Richtung des Ursprungspunkts N führt, wird somit der Ausregelzeitfaktor µ verringert, bzw. die Anregelzeit t vergrößert. Die Verschiebungsrichtung ist mit den Bezugszeichen µ2-, µ4- und µ5- bzw. t2+, t4+ und t5+ bezeichnet. Demgegenüber wird bei einer Einstellung gemäß der Erfindung, welche zu einer Verschiebung zumindest der Polstelle P2, P4 und/oder P5 entlang des entsprechenden Ursprungsstrahls A1 bis A3 weg vom Ursprungspunkt N führt, der Ausregelzeitfaktor µ vergrößert, bzw. die Anregelzeit t verringert. Die Verschiebungsrichtung ist mit den Bezugszeichen µ2+, µ4+ und µ5+ bzw. t2-, t4- und t5- bezeichnet.

Bevorzugt sind die Reglerparameter PA nur derart veränderbar, daß bei Polstellenpaaren, wie beispielsweise dem Polstellenpaar P4 und P5 eine spiegelsymmetrische Verschiebung bezüglich der Realteilachse RE bewirkt wird. Die Polstellen P4 und P5 werden im Beispiel der Figur 2d entlang des entsprechenden Ursprungsstrahls A1 bzw. A2 dann entweder spiegelsymmetrisch zum Ursprungspunkt N hin oder von diesem weg verschoben.

Vorzugsweise sind die Reglerparameter PA des weiteren nur derart veränderbar, daß keine Verschiebung von Polstellen bewirkt wird, welche zur Kompensation von Nullstellen dienen, wie beispielsweise die Polstelle P3 des geschlossenen Regelkreises R, welche zur Kompensation der Nullstelle N2 dient. Des weiteren sind die Reglerparameter PA in einer weiteren Ausführungsform der Erfindung nur derart veränderbar, daß bei Polstellen mit einem großen Einfluß auf die Verstärkung des geschlossenen Regelkreises R ebenfalls keine Verschiebung bewirkt wird, wie beispielsweise die Polstelle P1.

## Patentansprüche

1. Verfahren zur Einstellung von Reglerparametern (PA, Kl..Kn) eines Zustandsreglers (ZRB), bei dem der Zustandsregler (ZRB) mit einer Regelstrecke (S) einen geschlossenen Regelkreis (R) mit mindestens einer Polstelle (P1..P5) und mit mindestens einer Nullstelle (N1, N2) bildet, bei dem der Zustandsregler (ZRB) aus einem Beobachter (B) zur Ausgabe von Regelschätzwerten (XX1..XXn) aus Meßgrößen (Y1..Ym) einer Regelstrecke (S) und aus einem Basis-Zustandsregler (ZR), dem die Regelschätzwerte (XX1..XXn) zugeführt werden, gebildet wird und bei dem mit einer Reglereinstellvorrichtung (E) die die Polstellen (Pl..Pn) des geschlossenen Regelkreises (R) beeinflussenden Reglerparameter (PA, Kl..Kn) des Zustandsreglers (ZRB) zur Optimierung des Regelverhaltens des geschlossenen Regelkreises (R) in der Weise eingestellt werden, daß die Polstellen (P1..P5) des geschlossenen Regelkreises (R) bei einer Darstellung in einer komplexen Frequenzbereichsebene (SE, IM, RE) annähernd entlang von Halbkreisen (K) und/ oder Ursprungsstrahlen (A1..A3) verschoben werden

2. Verfahren nach Anspruch 2,
**dadurch gekennzeichnet,**
daß durch die Reglereinstellvorrichtung (E) lediglich eine Verschiebung von solchen Polstellen (P3) bewirkt wird, die nicht zur Kompensation von Nullstellen (N2) des geschlossenen Regelkreises dienen.

3. Verfahren nach einem der Ansprüche 1 oder 2,
**dadurch gekennzeichnet,**
daß vor einer Feineinstellung des Zustandsreglers (ZRB) eine Grundeinstellung des Zustandsreglers (ZRB), insbesondere eine standardisierte Grundeinstellung der Regelparameter und/oder des Zustandsreglers (ZRB) selbst aus einem Katalog vorgenommen wird.

4. Verfahren nach einem der Ansprüche 1 bis 3,
**dadurch gekennzeichnet,**
daß die Halbkreise (K) in der negativen komplexen Halbebene der Frequenzbereichsebene (SE) verlaufen und als Mittelpunkt den Ursprungspunkt (N) der Frequenzbereichsebene (SE) aufweisen.

5. Verfahren nach einem der Ansprüche 1 bis 4,
**dadurch gekennzeichnet,**
daß die Ursprungsstrahlen (A1..A3) in der negativen komplexen Halbebene der Frequenzbereichsebene (SE) verlaufen.

6. Verfahren nach einem der Ansprüche 1 bis 5,
**dadurch gekennzeichnet,**
daß die Reglerparameter (PA, K1..Kn) nur derart veränderbar sind, daß eine Verschiebung derjenigen Polstellen (P4, P5) entlang von Halbkreisen (K) bewirkt wird, welche nicht auf der Realteilachse (RE) der Frequenzbereichsebene (SE) liegen.

7. Verfahren nach einem der Ansprüche 1 bis 6,
**dadurch gekennzeichnet,**
daß zur Vergrößerung (κ4+, κ5+) oder Verringerung (κ4-, κ5-) des Überschwingfaktors (κ) des geschlossenen Regelkreises (R) die Reglerparameter (PA, K1..Kn) nur derart veränderbar sind, daß eine Verschiebung zumindest einer Polstelle (P4, P5) entlang eines Halbkreises (K) in Richtung der Real- oder Imaginärteilachse (RE, IM) der Frequenzbereichsebene (SE) bewirkt wird.

8. Verfahren nach einem der Ansprüche 1 bis 7,
**dadurch gekennzeichnet,**
daß zur Vergrößerung (µ2+, µ4+, µ5+) oder Verringerung (µ2-, µ4-, µ5-) des Ausregelzeitfaktors (µ) des geschlossenen Regelkreises (R) die Reglerparameter (PA, K1..Kn) nur derart veränderbar sind, daß eine Verschiebung zumindest einer Polstelle (P2, P4, P5) entlang eines Ursprungsstrahls (A1..A3) weg vom oder hin zum Ursprungspunkt (N) der Frequenzbereichsebene (SE) bewirkt wird.

9. Verfahren nach einem der Ansprüche 1 bis 8,
**dadurch gekennzeichnet,**
daß zur Vergrößerung (t2+, t4+, t5+) oder Verringerung (t2-,
t4-, t5-) der Anregelzeit (t) des geschlossenen Regelkreises (R) die Reglerparameter (PA, K1..Kn) nur derart veränderbar sind, daß eine Verschiebung zumindest einer Polstelle (P2, P4, P5) entlang eines Ursprungsstrahls (A1..A3) hin zum bzw. weg vom Ursprungspunkt (N) der Frequenzbereichsebene (SE) bewirkt wird.

10. Verfahren nach einem der Ansprüche 1 bis 9,
**dadurch gekennzeichnet,**
daß die Reglerparameter (PA, K1..Kn) nur derart veränderbar sind, daß bei Polstellenpaaren (P4, P5) eine spiegelsymmetrische Verschiebung bewirkt wird.

11. System zur Einstellung von Reglerparametern (PA, K1..Kn) eines Zustandsreglers (ZRB) für einen geschlossenen Regelkreis (R), der mindestens eine Polstelle (P1..P5) und mindestens eine Nullstelle (N1, N2) aufweist, mit einem Beobachter (B) zur Ausgabe von Regelschätzwerten (XX1..XXn) aus Meßgrößen (Yl..Ym) einer Regelstrecke (S), mit einem Basis-Zustandsregler (ZR), dem die Regelschätzwerte (XX1..XXn) zugeführt werden, und mit einer Reglereinstellvorrichtung (E) zur Einstellung von die Polstellen (P1..P5) des geschlossenen Regelkreises (R) beeinflussenden Reglerparametern (PA, Kl..Kn) des Zustandsreglers (ZRB), wobei die Reglereinstellvorrichtung (E) zur Einstellung der Reglerparameter (PA, Kl..Kn) in der Weise vorgesehen ist, daß zur Optimierung und Feineinstellung des Regelverhaltens des geschlossenen Regelkreises die Polstellen (P1..P5) des geschlossenen Regelkreises (R) bei einer Darstellung in einer komplexen Frequenzbereichsebene (SE, IM, RE) annähernd entlang von Halbkreisen (K) und/oder Ursprungsstrahlen (A1..A3) verschoben werden.

12. System nach Anspruch 11,
**dadurch gekennzeichnet,**
daß durch die Reglereinstellvorrichtung (E) keine Verschiebung von solchen Polstellen (P3) bewirkt wird, die zur Kompensation einer Nullstelle (N2) dienen.

13. System nach einem der Ansprüche 11 oder 12,
**dadurch gekennzeichnet,**
daß Mittel zur Grundeinstellung des Zustandsreglers (ZRB), insbesondere eine standardisierte Grundeinstellung der Regelparameter aus einem Katalog und/oder Mittel zur Auswahl des Zustandsreglers (ZRB) selbst aus einem Katalog vorgesehen sind.

14. System nach einem der Ansprüche 11 bis 13,
**dadurch gekennzeichnet,**
daß die Reglereinstellvorrichtung (E) zur Verschiebung der Polstellen (P1..P5) in der Weise vorgesehen ist, daß die Halbkreise (K) in der negativen komplexen Halbebene der Frequenzbereichsebene (SE) verlaufen und als Mittelpunkt den Ursprungspunkt (N) der Frequenzbereichsebene (SE) aufweisen.

15. System nach einem der Ansprüche 11 bis 14,
**dadurch gekennzeichnet,**
daß die Reglereinstellvorrichtung (E) zur Verschiebung der Polstellen (P1..P5) in der Weise vorgesehen ist, daß die Ursprungsstrahlen (A1..A3) in der negativen komplexen Halbebene der Frequenzbereichsebene (SE) verlaufen.

16. System nach einem der Ansprüche 11 bis 15,
**dadurch gekennzeichnet,**
daß die Reglereinstellvorrichtung (E) zur Verschiebung der Polstellen (P1..P5) in der Weise vorgesehen ist, daß eine Verschiebung derjenigen Polstellen (P4, P5) entlang von Halbkreisen (K) bewirkt wird, welche nicht auf der Realteilachse (RE) der Frequenzbereichsebene (SE) liegen.

17. System nach einem der Ansprüche 11 bis 16,
**dadurch gekennzeichnet,**
daß die Reglereinstellvorrichtung (E) zur Verschiebung der Polstellen (P1..P5) in der Weise vorgesehen ist, daß zur Vergrößerung (κ4+, κ5+) oder Verringerung (κ4-, κ5-) des Überschwingfaktors (K) des geschlossenen Regelkreises (R) die Reglerparameter (PA, K1..Kn) nur derart veränderbar sind, daß eine Verschiebung zumindest einer Polstelle (P4, P5) entlang eines Halbkreises (K) in Richtung der Real- oder Imaginärteilachse (RE, IM) der Frequenzbereichsebene (SE) bewirkt wird.

18. System nach einem der Ansprüche 11 bis 17,
**dadurch gekennzeichnet,**
daß die Reglereinstellvorrichtung (E) zur Verschiebung der Polstellen (P1..P5) in der Weise vorgesehen ist, daß zur Vergrößerung (µ2+, µ4+, µ5+) oder Verringerung (u2-, µ4-, µ5-) des Ausregelzeitfaktors (µ) des geschlossenen Regelkreises (R) die Reglerparameter (PA, K1..Kn) nur derart veränderbar sind, daß eine Verschiebung zumindest einer Polstelle (P2, P4, P5) entlang eines Ursprungsstrahls (A1..A3) weg vom oder hin zum Ursprungspunkt (N) der Frequenzbereichsebene (SE) bewirkt wird.

19. System nach einem der Ansprüche 11 bis 18,
**dadurch gekennzeichnet,**
daß die Reglereinstellvorrichtung (E) zur Verschiebung der Polstellen (P1..P5) in der Weise vorgesehen ist, daß zur Vergrößerung (t2+, t4+, t5+) oder Verringerung (t2-, t4-, t5-) der Anregelzeit (t) des geschlossenen Regelkreises (R) die Reglerparameter (PA, K1..Kn) nur derart veränderbar sind, daß eine Verschiebung zumindest einer Polstelle (P2, P4, P5) entlang eines Ursprungsstrahls (A1..A3) hin zum oder weg vom Ursprungspunkt (N) der Frequenzbereichsebene (SE) bewirkt wird.

20. System nach einem der Ansprüche 11 bis 19,
**dadurch gekennzeichnet,**
daß die Reglereinstellvorrichtung (E) zur Verschiebung der Polstellen (P1..P5) in der Weise vorgesehen ist, daß die Reglerparameter (PA, K1..Kn) nur derart veränderbar sind, daß bei Polstellenpaaren (P4, P5) eine spiegelsymmetrische Verschiebung bewirkt wird.

## Claims

1. Process for setting controller parameters (PA, K1..Kn) of a state controller (ZRB), in which the state controller (ZRB), along with a controlled system (s), forms a closed control loop (R) having at least one pole locus (P1..P5) and at least one zero locus (N1, N2), in which the state controller (ZRB) is formed by a monitor (B) for the output of estimated control values (XX1..XXn) generated from measured variables (Y1..Ym) of a controlled system (S), and by a base state controller (ZR) to which the estimated control values (XX1..XXn) are fed, and in which the controller parameters (PA, K1..Kn) of the state controller (ZRB) influencing the pole loci (P1..Pn) of the closed control loop (R) are set by a controller setting device (E) to optimise the control response of the closed control loop (R) in such a manner that, in a representation in a complex frequency range plane (SE, IM, RE), the pole loci (P1..P5) of the closed control loop (R) are displaced along semicircular arcs (K) and/or rays (A1..A3) radiating from the origin.

2. Process according to Claim 2,
**characterised in that** the controller setting device (E) causes a displacement of only those pale loci (P3) that are not used for the compensation of zero loci (N2) of the closed control loop.

3. Process according to one of Claims 1 or 2,
**characterised in that** a basic setting of the state controller (ZRB), in particular a standardised basic setting of the control parameters and/or of the state controller (ZRB) itself, is carried out from a catalogue prior to a fine tuning of the state controller (ZRB).

4. Process according to one of Claims 1 to 3,
**characterised in that** the semicircular arcs (K) are located in the negative complex half-plane of the frequency range plane (SE) and have the origin (N) of the frequency range plane (SE) as their mid-point.

5. Process according to one of Claims 1 to 4,
**characterised in that** the rays (A1..A3) from the origin are located in the negative complex half-plane of the frequency range plane (SE).

6. Process according to one of Claims 1 to 5,
**characterised in that** the controller parameters (PA, K1..Kn) can be varied only in such a way as to cause a displacement along semicircular arcs (K) of those pole loci (P4, P5) that do not lie on the real component axis (RE) of the frequency range plane (SE).

7. Process according to one of Claims 1 to 6,
**characterised in that** in order to increase (κ4+, κ5+) or decrease (κ4-, κ5-) the amplitude factor (κ) of the closed control loop (R), the controller parameters (PA, K1..Kn) can be varied only in such a way as to cause a displacement of at: least one of the pole loci (P4, P5) along a semicircular arc (K) in the direction of the real or imaginary component axis (RE, IM) of the frequency range plane (SE).

8. Process according to one of Claims 1 to 7,
characterised in that
in order to increase (*µ*2+, *µ*4+, *µ*5+) or decrease (*µ*2-, *µ*4-, *µ*5-) the transient recovery time factor (*µ*) of the closed control loop (R), the controller parameters (PA, K1..Kn) can be varied only in such a way as to cause a displacement of at-least one of the pole loci (F2, P4, P5) along a ray (A1..A3) away from or towards the origin (N) of the frequency range plane (SE).

9. Process according to one of Claims 1 to 8,
**characterised in that**
in order to increase (t2+, t4+, t5+) or decrease (t2-, t4-, t5-) the rise time (t) of the closed control loop (R), the controller parameters (PA, K1..Kn) can be varied only in such a way as to cause a displacement of at least one of the pole loci (P2, P4, P5) along a ray (A1..A3) towards or away from the origin (N) of the frequency range plane (SE).

10. Process according to one of Claims 1 to 9,
**characterised in that** the controller parameters (PA, K1..Kn) can be varied only in such a way as to cause an axially symmetrical displacement of pole loci pairs (P4, P5).

11. System for setting controller parameters (PA, K1..Kn) of a state controller (ZRB) for a closed control loop (R) that has at least one pole locus (P1..P5) and at least one zero locus (N1, N2), with a monitor (B) for the output of estimated control values (XX1..XXn) generated from measured variables (Y1..Ym) of a controlled system (S), with a base state controller (ZR) to which the estimated control values (XX1..XXn) are fed, and with a controller setting device (E) for setting the pole loci (P1..P5) of the closed control loop (R) influencing controller parameters (PA, K1..Kn) of the state controller (ZRB), wherein for the setting of the controller parameters (PA, K1..Kn), the controller setting device (E) is provided so that for the optimisation and fine tuning of the control response of the closed control loop, in a representation in a complex frequency range plane (SE, IM, RE), the pole loci (P1..P5) of the closed control loop (R) are displaced approximately along semicircular arcs (K) and/or along rays (A1..A3) radiating from the origin.

12. System according to Claim 11,
**characterised in that** the controller setting device (E) causes no displacement of those pole loci (P3) that are used for the compensation of a zero locus (N2).

13. System according to one of Claims 11 or 12,
**characterised in that** means are provided from a catalogue for the basic setting of the state controller (ZRB), in particular a standardised basic setting of the control parameters, and/or means are provided from a catalogue for the selection of the state controller (ZRB) itself.

14. System according to one of Claims 11 to 13,
**characterised in that** the controller setting device (E) is provided for the displacement of the pole loci (P1..P5) in such a way that the semicircular arcs (K) are located in the negative complex half-plane of the frequency range plane (SE) and have the origin (N) of the frequency range plane (SE) as their mid-point.

15. System according to one of Claims 11 to 14,
**characterised in that** the controller setting device (E) is provided for the displacement of the pole loci (P1..P5) in such a way that the rays (A1..A3) from the origin are located in the negative complex half-plane of the frequency range plane (SE).

16. System according to one of Claims 11 to 15,
**characterised in that**
the controller setting device (E) is provided for the displacement of the pole loci (P1..P5) in such a way that it causes a displacement along semicircular arcs (K) of those pole loci (P4, P5) that do not lie on the real component axis (RE) of the frequency range plane (SE).

17. System according to one of Claims 11 to 16,
**characterised in that**
the controller setting device (E) is provided for the displacement of the pole loci (P1..P5) in such a way that in order to increase. (κ4+, κ5+) or decrease (κ4-, κ5-) the amplitude factor (κ) of the closed control loop (R), the controller parameters (PA, K1..Kn) can be varied only in such a way as to cause a displacement of at least one of the pole loci (P4, P5) along a semicircular arc (K) in the direction of the real or imaginary component axis (RE, IM) of the frequency range plane (SE).

18. System according to one of Claims 11 to 17,
**characterised in that**
the controller setting device (E) is provided for the displacement of the pole loci (P1..P5) in such a way that in order to increase (*µ*2+, *µ*4+, *µ*5+) or decrease (*µ*2-, *µ*4-, *µ*5-) the transient recovery time factor (*µ*) of the closed control loop (R), the controller parameters (PA, K1..Kn) can be varied only in such a way as to cause a displacement of at least one of the pole loci (P2, P4, P5) along a ray (A1..A3) away from cr towards the origin (N) of the frequency range plane (SE),

19. System according to one of Claims 11 to 18,
**characterised in that**
the controller setting device (E) is provided for the displacement of the pole loci (P1..P5) in such a way that in order to increase (t2+, t4+, t5+) or decrease (t2-, t4-, t5-) the rise time (t) of the closed control loop (R), the controller parameters (PA, K1..Kn) can be varied only in such a way as to cause a displacement of at least one of the pole loci (P2, P4, P5) along a ray (A1..A3) towards or away from the origin (N) of the frequency range plane (SE).

20. System according to one of Claims 11 to 19,
**characterised in that** the controller setting device (E) is provided for the displacement of the pole loci (P1..P5) in such a way that the controller parameters (PA, K1..Kn) can be varied only in such a way as to cause an axially symmetrical displacement of pole loci pairs (P4, P5).

## Revendications

1. Procédé de réglage de paramètres (PA, K1...Kn) d'un régulateur (ZRB) d'état, dans lequel le régulateur (ZRB) d'état comportant un système (S) réglé forme une boucle (R) de régulation fermée ayant au moins un point (P1...P5) polaire et ayant au moins un point (N1, N2) zéro, dans lequel le régulateur (ZRB) d'état est formé d'un observateur (B) pour l'émission de valeurs (XX1...XXn) d'estimation de régulation à partir de grandeurs (Y1...Ym) de mesure d'un système (S) réglé et d'un régulateur (ZR) d'état de base auquel sont envoyées les valeurs (XX1...XXn) d'estimation de régulation, et dans lequel les paramètres (PA, K1...Kn) de régulateur du régulateur (ZRB) d'état influençant les points (P1...Pn) polaires de la boucle (R) de régulation fermée sont réglés par un dispositif (E) de réglage du régulateur, pour optimiser le comportement de régulation de la boucle (R) de régulation fermée, de manière à déplacer les points (P1...P5) polaires de la boucle (R) de régulation fermée dans une représentation dans un plan (SE, IM, RE) complexe de domaine des fréquences à peu près suivant des demi-cercles (K) eVou des rayons (A1...A3) partant de l'origine.

2. Procédé suivant la revendication 2, caractérisé en ce qu'il n'est provoqué par le dispositif (E) de réglage du régulateur qu'un déplacement de points (P3) polaires qui ne servent pas à la compensation de point (N2) zéro de la boucle de régulation fermée.

3. Procédé suivant l'une des revendications 1 ou 2, caractérisé en ce qu'il est procédé, avant un réglage fin du régulateur (ZRB) d'état, à un réglage de base du régu!ateur (ZRB) d'état, notamment un réglage de base normalisé des paramètres de régulation et/ou du régulateur (ZRB) d'état lui-même à partir d'un catalogue.

4. Procédé suivant l'une des revendications 1 à 3, caractérisé en ce que les demi-cercles (K) s'étendent dans le demi-plan complexe négatif du plan (SE) de domaine des fréquences et comportent comme centre le point (N) d'origine du plan (SE) de domaine des fréquences.

5. Procédé suivant l'une des revendication 1 à 4, caractérisé en ce que les rayons (A1...A3) partant de l'origine s'étendent dans le demi-plan complexe négatif du plan (SE) de domaine des fréquences.

6. Procédé suivant l'une des revendication 1 à 5, caractérisé en ce que les paramètres (PA, K1...Kn) de régulateur ne peuvent être modifiés que de manière à provoquer un déplacement des points (P4, P5) polaires suivant des demi-cercles (K) qui ne se trouvent pas sur l'axe (RE) partiel réel du plan (SE) de domaine des fréquences.

7. Procédé suivant l'une des revendication 1 à 6, caractérisé en ce que, pour augmenter (κ4+, κ5+) ou diminuer (κ4-, κ5-) le facteur (κ) d'amplitude de la boucle (R) de régulation fermée, les paramètres (PA, K1...Kn) de régulateur ne peuvent être modifiés que de manière à provoquer un déplacement d'au moins un point (P4, P5) polaire suivant un demi-cercle (K) dans la direction du demi-axe (RE) réel ou du demi-axe (IM) imaginaire du plan (SE) de domaine des fréquences.

8. Procédé suivant l'une des revendication 1 à 7, caractérisé en ce que, pour augmenter (µ2+, µ4+, µ5+) ou diminuer (µ2-, µ4-, µ5-) le facteur (µ) de durée totale de la régulation de la boucle (R) de régulation fermée, les paramètres (PA, K1...Kn) du régulateur ne peuvent être modifiés que de manière à provoquer un déplacement d'au moins un point (P2, P4, P5) polaire suivant un rayon (A1...A3) partant de l'origine l'éloignant ou l'approchant du point (N) d'origine du plan (SE) de domaine des fréquences.

9. Procédé suivant l'une des revendication 1 à 8, caractérisé en ce que, pour allonger (t2+, t4+, t5+) ou raccourcir (t2-, t4-, t5-) la durée (t) d'arrivée au réglage de la boucle (R) de régulation fermée, les paramètres (PA, K1...Kn) du régulateur ne peuvent être modifiés que de manière à provoquer un déplacement d'au moins un point (P2, P4, P5) polaire suivant un rayon (A1...A3) partant de l'origine en l'approchant ou en l'éloignant du point (N) d'origine du plan (SE) de domaine des fréquences.

10. Procédé suivant l'une des revendication 1 à 9, caractérisé en ce que les paramètres (PA, K1...Kn) de régulateur ne peuvent être modifiés que de manière à provoquer un déplacement symétrique comme en un miroir pour des couples (P4, P5) de points polaires.

11. Système de réglage de paramètres (PA, K1...Kn) de régulateur d'un régulateur (ZRB) d'état pour une boucle (R) de régulation fermée qui comporte au moins un point (P1...P5) polaire et au moins un point (N1, N2) zéro, comportant un observateur (B) pour l'émission de valeurs (XX1...XXn) d'estimation de régulation à partir de grandeurs (Y1...Ym) de mesure d'un système (S) réglé, comportant un régulateur (ZR) d'état de base auquel sont envoyées les valeurs (XX1...XXn) d'estimation de régulation, et comportant un dispositif (E) de réglage du régulateur pour le réglage de paramètres (PA, K1...Kn) du régulateur (ZRB) d'état influençant les points (P1...P5) polaires de la boucle (R) de régulation fermée, le dispositif (E) de réglage du régulateur étant prévu pour la régulation des paramètres (PA, K1...Kn) du régulateur de telle manière que, pour l'optimisation et le réglage fin du comportement de régulation de la boucle de régulation fermée, les points (P1...P5) polaires de la boucle (R) de régulation fermée sont déplacés, dans une représentation dans un plan (SE, IM, RE) complexe de domaine des fréquences, à peu près suivant des demi-cercles (K) et/ou des rayons (A1...A3) partant de l'origine.

12. Système suivant la revendication 11, caractérisé en ce qu'il n'est pas provoqué par le dispositif (E) de réglage du régulateur de déplacement de points(P3) polaires qui servent à la compensation d'un point (N2) zéro.

13. Système suivant l'une des revendications 1 ou 12, caractérisé en ce qu'il est prévu des moyens pour le réglage de base du régulateur (ZRB) d'état, notamment un réglage de base normalisé des paramètres du régulateur à partir d'un catalogue et/ou des moyens pour sélectionner le régulateur (ZRB) d'état dans un catalogue.

14. Système suivant l'une des revendications 11 à 13, caractérisé en ce que le dispositif (E) de réglage du régulateur est prévu pour le déplacement des points (P1...P5) polaires de telle manière que les demi-cercles (K) s'étendent dans le demi-plan complexe négatif du plan (SE) de domaine des fréquences et comportent comme centre le point (N) d'origine du plan (SE) de domaine des fréquences.

15. Système suivant l'une des revendications 11 à 14, caractérisé en ce que le dispositif (E) de réglage du régulateur est prévu pour le déplacement des points (P1...P5) polaires de telle manière que les rayons (A1...A3) partant de l'origine s'étendent dans le demi-plan complexe négatif du plan (SE) de domaine des fréquences.

16. Système suivant l'une des revendications 11 à 15, caractérisé en ce que le dispositif (E) de réglage du régulateur est prévu pour le déplacement des points (P1...P5) polaires de manière à provoquer un déplacement des points (P4, P5) polaires le long de demi-cercles (K) qui ne se trouvent pas sur le demi-axe (RE) réel du plan (SE) de domaine des fréquences.

17. Système suivant l'une des revendications 11 à 16, caractérisé en ce que le dispositif (E) de réglage du régulateur est prévu pour le déplacement des points (P1...P5) polaires de telle manière que, pour augmenter (κ4+, κ5+) ou pour diminuer (κ4-, κ5-) le facteur (κ) d'amplitude de la boucle (R) de régulation fermée, les paramètres (PA, K1...Kn) du régulateur ne peuvent être modifiés que de manière à provoquer un déplacement d'au moins un point (P4, P5) polaire suivant un demi-cercle (K) dans la direction du demi-axe (RE) réel ou du demi-axe (IM) imaginaire du plan (SE) de domaine des fréquences.

18. Système suivant l'une des revendications 11 à 17, caractérisé en ce que le dispositif (E) de réglage du régulateur est prévu pour le déplacement des points (P1...P5) polaires de telle manière que, pour augmenter (µ2+, µ4+, µ5+) ou diminuer (µ2-, µ4-, µ5-) le facteur (µ) de durée totale de la régulation de la boucle (R) de régulation fermée, les paramètres (PA, K1...Kn) du régulateur ne peuvent être modifiés que de manière à provoquer un déplacement d'au moins un point (P2, P4, P5) polaire suivant un rayon (A1...A3) partant de l'origine en l'éloignant ou en l'approchant du point (N) d'origine du plan (SE) de domaine des fréquences.

19. Système suivant l'une des revendication 11 à 18, caractérisé en ce que le dispositif (E) de réglage du régulateur est prévu pour le déplacement des points (P1...P5) polaires de telle manière que, pour allonger (t2+, t4+, t5+) ou raccourcir (t2-, t4-, t5-) la durée (t) d'arrivée à la régulation de la boucle (R) de régulation fermée, les paramètres (PA, K1...Kn) du régulateur ne peuvent être modifiés que de manière à provoquer un déplacement d'au moins un point (P2, P4, P5) polaire suivant un rayon (A1...A3) partant de l'origine en l'approchant ou en l'éloignant du point (N) d'origine du plan (SE) de domaine des fréquences.

20. Système suivant l'une des revendication 11 à 19, caractérisé en ce que le dispositif (E) de réglage du régulateur est prévu pour le déplacement des points (P1...P5) polaires de telle manière que les paramètres (PA, K1...Kn) du régulateur ne peuvent être modifiés que de manière à provoquer, pour des couples (P4, P5) de points polaires, un déplacement symétrique comme en un miroir.
